Europäisches Patentamt

(19) European Patent Office

Office européen des brevets

(11) Publication number : **0 465 285 A2**

## (12) EUROPEAN PATENT APPLICATION

(21) Application number : **91401598.7**

(22) Date of filing : **14.06.91**

(51) Int. Cl.⁵ : **B08B 3/04**

(30) Priority : **21.06.90 JP 163067/90**

(43) Date of publication of application :
**08.01.92 Bulletin 92/02**

(84) Designated Contracting States :
**DE FR GB**

(71) Applicant : **PIASTEC CORP.**
**21-3 Toyosaki 3-chome, Kita-ku**
**Osaka-shi, Osaka-fu (JP)**
Applicant : **Yokoyama, Yoshimasa**
**104, No. 5-3, Sumiyoshi-Higashicho 2-chome**
**Higashinada-ku Kobe-shi, Hyogo-ken (JP)**

(72) Inventor : **Yokoyama, Yoshimasa**
**104, No.5-3, Sumiyoshi-higashicho 2-chome**
**Higashinada-ku, Kobe-shi, Hyogo-ken (JP)**

(74) Representative : **Kohn, Philippe et al**
**c/o CABINET LAVOIX 2, place d'Estienne**
**d'Orves**
**F-75441 Paris Cédex 09 (FR)**

(54) Method and device for washing instruments.

(57)    The present invention relates to a method for washing instruments so as to be capable of uniformly washing away any dirt from all of the surfaces of the instruments and to have no bad influence on the instruments by repeatedly bringing the numerous particles of a gradually soluble substance having a property gradually dissolving in water into contact with dentures, dental appliances, dishes, knives and other instruments in washing liquid containing a surfactant. In addition, a device for washing the instruments comprises a washing tank (2) having a rotational axis (4) deceleratedly rotated one-directionally or normally or reversely by a motor (3) and passing through the bottom portion in water-tightness, a washing cage (5) attached to the rotational axis (4) in the washing tank (2), and water flow obstructions (6,6') placed in the washing tank (2) in the condition not so as to be brought into contact with the washing cage (5) when the washing cage (5) rotates, whereby the turbulent flow of the washing liquid is generated in the washing tank (2) to bring the numerous particles of the gradually soluble substance into contact with the instruments in the washing liquid effectively and repeatedly.

EP 0 465 285 A2

F I G. 1

This invention generally relates to a method for washing dentures, dental appliances, dishes, knives and other instruments and its device, and more particularly, to a method for washing the instruments in a washing liquid containing a surfactant and to a washing suitable for practising the washing method.

For the purpose of washing the instruments such as dentures and dental appliances, means for applying an ultrasonic vibration to the instruments in the washing liquid has been conventionally adopted.

Means for continuously spraying the compressed shower of wash water containing the surfactant to dishes is adopted for washing dishes or the like.

In case any fine cracks arise in the dentures and other instruments formed by ceramics or the like, the washing by applying the ultrasonic vibration as mentioned above has a weak point that the resulting crack is enlarged rapidly due to the ultrasonic vibration.

In addition, in case of the instrument whose member is composed by connecting to a different material, e.g., a denture having a metal bridge, by adhesion, there is a weak point that the adhesion portion is loosened and is ready to be shaky when the ultrasonic vibration is applied.

Furthermore, the sticky dirts, e.g., resins, oils, cannot be easily washed away in case the compressed shower of the washing is applied to the instruments or it takes a long hour to wash it away. In addition, in case the instruments in their different forms are washed, a hollow portion cannot be fully washed in some cases even by blasting the shower to such instruments from the whole circumferences.

An object of the present invention is to provide a method for washing the instruments so as to be capable of resolving the weak points in conventional washing methods as mentioned above and a device for washing the instruments suitable for practising the washing method.

According to the method in the present invention for attaining the above-mentioned object, there is provided a method for washing the instruments comprising the step of repeatedly bringing the numerous particles of a gradually soluble substance having a property of gradually dissolving in water, into contact with the instruments in washing liquid containing a surfactant.

For repeatedly bringing the numerous particles of a gradually soluble substance into contact with the instruments, it is preferable to adopt means for generating a turbulent flow of the washing liquid in a washing tank containing the numerous particles of the gradually soluble substance.

In specific, the washing liquid is flown turbulently by making a decelerating rotation of a washing cage inserted with the instruments either one-directionally or in a normal or reversed direction in the washing tank.

As for the gradually soluble substance, it is preferable to use the salts of the alkaline peroxides preliminarly processed so as to process a certain gradual solubility.

In one of the devices for washing the instruments according to the present invention, for attaining the above-mentioned object, both a washing tank with the rotational axis rotated deceleratedly by a motor and passing through the bottom in water-tightness and a washing cage attached to the rotational axis in the washing tank are provided, and a water flow obstruction is provided in the washing tank in the condition without contacting with the washing cage when the washing cage rotates, respectively.

It is preferable that the rotational axis is controlled to rotate normally or reversely in alternate way every a predetermined time.

It is also preferable that the water flow obstruction is in a fin shape composed of several pieces formed on the inner wall in the washing tank and along the longitudinal direction.

In the other one of the devices for washing the instruments according to the present invention, for attaining the above-mentioned object, both a washing tank with the rotational axis rotating deceleratedly and normally or reversely by a motor and passing through the bottom in water-tightness and a washing cage attached to the rotational axis in the washing tank are provided, respectively.

In the respective washing devices, it is preferable to divide the washing cage into several rooms by either pins or projections standing upright from its bottom portion, and it is further preferable that the washing cage is in a plain and roughly rectangular form.

According to the above-mentioned method for washing the instruments in the present invention, the instruments can be washed well by repeatedly bringing the numerous particles of the gradually soluble substance into contact with the instruments together with the washing liquid.

In case of using an alkaline peroxide and an appropriate decomposition catalyst as the gradually soluble substance, the instruments are promoted to be bleached and disinfected.

According to one of the devices for washing the instruments in the present invention, when the washing liquid containing the numerous particles of the gradually soluble substance is put into the washing tank, the instruments are put into the washing cage and the washing cage is rotated deceleratedly by means of the motor, a water flow in a form of concentric circle is generated by the rotation of the washing cage in the washing tank, and the rate of the water flow is varied and disturbed by bringing the water flow into contact with the obstruction. As a result, both the washing liquid and the particles of the gradually soluble substance contained in the washing liquid are brought into contact with all surfaces of the instruments under a required pressure, and the instruments are washed.

When the rotational axis is rotated normally or reversely in an alternate way every a predetermined time, the contact angle of the washing liquid and the particles of the gradually soluble substance contained in the washing liquid to the instruments varies every time the rotational direction varies, and the instruments are washed uniformly.

In addition, according to the other one of the devices for washing the instruments in the present invention, when the washing liquid containing the numerous particles of the gradually soluble substance together with the instruments are put in the washing cage, and the washing cage is rotated by the motor normally or reversely in an alternate way at one or several times, accompanied by the normal or reversed rotation, both the washing liquid and the numerous particles of the gradually soluble substance contained in the washing liquid are repeatedly brought into contact with the surfaces of the instruments under a required pressure, and the instruments are washed uniformly as the contact angle of the washing liquid and the numerous particles of the gradually soluble substance to the instruments varies every time the rotational direction varies.

Furthermore, in case the washing cage in each of the washing devices is plain and roughly rectangular, the turbulence of the washing liquid is further promoted due to the difference in the rotational radius of the washing cage at each portion.

The foregoing and other objects and features of the invention will become apparent from the following description of a preferred embodiment of the invention with reference to the accompanying drawings, in which:

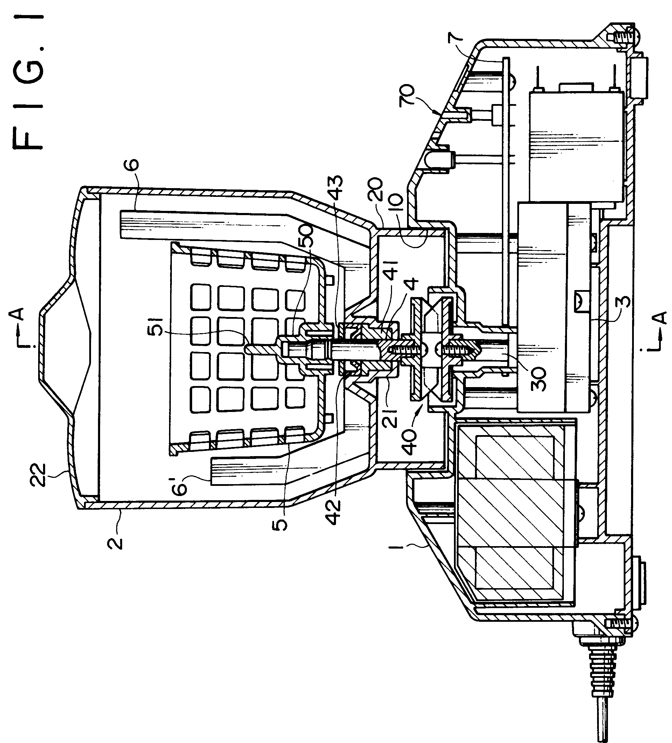

Fig. 1 is a longitudinal sectional view showing a device for washing the instruments as a preferred embodiment of the present invention;

Fig. 2 is a plan view of the condition with a lid taken away from a washing tank of Fig. 1; and

Fig. 3 is a partially sectional view taken substantially along arrow line A-A of Fig. 1.

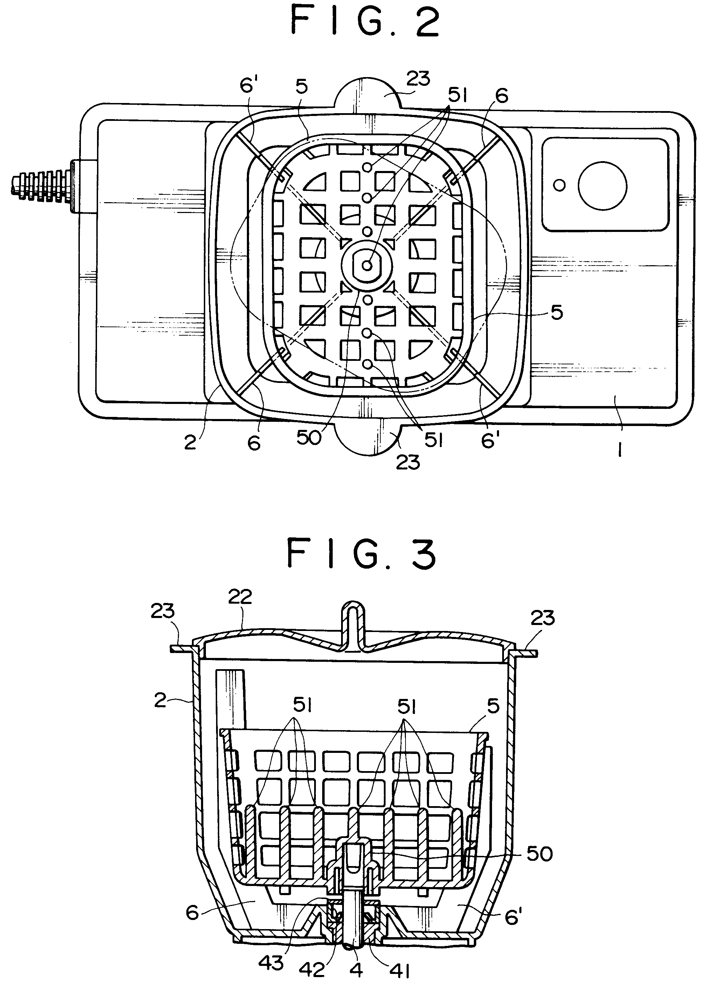

Reference numeral 1 indicates a synthetic resin-made hollow base. A synthetic resin-made washing tank 2 is set stably on a pan 10 formed at the center of the upper portion in this hollow base 1, in the condition that a lower portion 20 is inserted into the hollow base 1. The washing tank 2 is molded into a form of plane quadrangle as shown in Fig. 2, and a lid 22 is attached to the upper portion.

A motor (geared motor) 3 is accommodated in the hollow base 1, and a rotational axis 4 is meshed with and connected perpendicularly to an output shaft 30 of the motor 3 through a joint 40 formed in a clutch shape. The rotational axis 4 is supported rotatably and in water-tightness by both a bearing metal 41 in a bearing portion 21 in a cup shape formed at the center of the bottom in the washing tank 2 and seal members 42, 43, in the condition that the rotational axis is passed through the bottom portion of the washing tank 2, and the top end of the rotational axis protrudes into the washing tank 2.

According to the above-mentioned construction, when the washing tank 2 is lifted by holding its handle 23, the lower portion 20 is set to be released from the pan 10 of the hollow base 1.

In the synthetic resin-made washing cage 5 within the washing tank 2, the top end of the rotational axis 4 is connected attachably and detachably to a joint portion 50 formed at the center of the bottom portion, and the washing cage 5 is rotated by the rotational axis 4.

Between the washing tank 2 and the washing cage 5, water flow obstructions 6, 6' in a fin shape reaching the inner bottom portion along the vertical direction are installed integrally with the inner wall of each corner in the washing tank 2. In comparison of one diagonal water flow obstructions 6 with the other diagonal water flow obstructions 6', the length of the longitudinal direction in the former becomes longer than that in the latter.

The washing cage 5 is formed in a plain and roughly rectangular shape as shown in Fig. 2 and divided by pins or projections 51 protruded into the center of the inner bottom portion into two domains, and separated instruments (not shown) can be put into the respectively divided domains.

A control block 7 is placed in the hollow base 1. The control block 7 of this preferred embodiment is designed for starting the motor 3 by pushing a sheet switch 70 and controlling the motor 3 so as to rotate the rotational axis 4 at about 100 to 120 r.p.m. normally or reversely in an alternate way every one minute for about ten minutes.

An example by use of the washing device of this preferred embodiment is given, for example, in case of washing dentures, in the following. A PH 5 to 7 washing liquid is prepared by mixing 41.6 wt% of an alkaline peroxide having gradual solubility in particle size 0.5 to 1 mm, 17 wt% of a surfactant, 16.4 wt.% of auxiliaries of the surfactant, and 25 wt.% of an organic acid with the water reaching closed to the upper end of the water flow obstruction 6 in the washing tank 2. A trace amount of perfume or dyestuff is added, if necessary.

By taking off the lid 22 to open the washing tank 2, placing the dentures (not shown) in the washing cage 5 at their required attitudes, pouring the washing liquid thus prepared as mentioned above into the washing tank 2, closing the lid 22 of the washing tank 2 and rotating the rotational axis 4 by the switch operation as mentioned above, the water flow of the washing liquid in a form of roughly concentric circle arises in the washing tank 2 while accompanied by the rotation of the washing cage 5. As the water flow strikes against each inner plain and roughly rectangular surface of the washing tank 2 and against the water flow obstruction 6 when the plain and roughly rectangular washing cage 5 having the different radius of rotation in each portion rotates, the washing liquid in the circumferential portion flows in a central direction, and as a result, the washing liquid at the center portion is scattered to move toward a circumferential direction. Accordingly, the washing liquid and the particles of the gradually soluble substance containing an alkaline peroxide are repeatedly brought into contact with the dentures from different directions under a required pressure to give the condition for polishing dirty surfaces softly.

The dentures are uniformly washed by decomposing the attachment to the dentures due to the resulting oxidation, bleaching and disinfection from the generation of $H_2O_2$, $O_2$ and $CO_2$ by the reaction between an alkaline peroxide and an organic acid, and by the soft polishing reaction due to the particles of the gradually soluble substance against the dirt on the surface.

The alkaline peroxide is prepared so as to foam while gradually dissolving in water and to almost completely dissolve in 7 to 10 minutes.

Moreover, as the contact angle of the washing liquid and the particles of the alkaline peroxide against the dentures varies every time the washing cage 5 repeats the normal and reversed rotations, the dentures are washed more uniformly and effectively.

The substance with a large specific gravity in the washing liquid is ready to concentrate on the inner bottom portion of the washing tank 2, but the water flow obstructions 6, 6' are different in their lengths and there are many obstructions under the intermediate of the washing tank 2 in depth. As a result, the substances with large specific gravities are prevented from precipitating.

As the numerous particles are gradually soluble substances, there is an effect of polishing softly against the dirt on the surface of the instruments as mentioned above, and the effluent does not plug up any pipelines when it is released to any sewer.

As for the gradually soluble substance, other substances can be used. However, it is preferable that sodium salts e.g., alkaline peroxide, alkaline hypochlorite, phosphate are used.

According to the washing method and device of this preferred embodiment, they do not have a structure for applying a drastic vibration to the instruments in water and even though any small cracks are produced in the instruments, they do not become rapidly larger by washing. In addition, in case of the instruments connected to the member of the different material by adhesion as the case of the denture attached with a metal bridge, the rattling has not been produced in the connected portion by washing.

In the washing device of this preferred embodiment, the water flow obstructions 6, 6' are formed in a fin shape. However, they are good enough so far as they can disturb the water flow, and they may be a material with a number of projections. Furthermore, as they may locate between the washing cage 5 and the inner wall of the washing tank 2, they may be formed in the condition projecting into the back side of the lid 22 so as to locate between the washing tank 2 and the washing cage 5 when the lid 22 is closed in case of using by closing the lid 22.

In case the rotation of the rotational axis 4 is controlled so as to convert the rotational direction either normally or reversely every one or several times, that is, at the interval of a short time, the water flow can be sufficiently turbulent without any water flow obstructions 6, 6'.

Namely, when the washing cage 5 converts its rotational direction at the interval of a short time, the flow of the washing liquid sufficiently disturbs due to this, and acts roughly similar to that in case of the above-mentioned preferred embodiment.

Furthermore, a method and its device for washing the instruments in the present invention are restricted to the above-mentioned preferred embodiment, and they include the cases for practising by varying appropriately and adding other factors in what is claimed.

According to the method for washing the instruments in the present invention, the numerous particles of the gradually soluble substance are repeatedly brought into contact with the instruments in the washing liquid. As a result, the dirt on the instruments can be washed away uniformly from all of their surfaces, and no bed influences are given to dentures and other instruments.

In addition, according to the device for washing the instruments in the present invention, any dentures and other instruments can be brought into contact with the numerous particles of the gradually soluble substance and the washing liquid effectively and repeatedly.

## Claims

1. A method for washing instruments, comprising the step of repeatedly bringing the numerous particles of a gradually soluble substance having a gradually dissolving property into water into contact with said instruments in washing liquid containing a surfactant.

2. A method for washing instruments according to claim 1, wherein the numerous particles of the gradually soluble substance are repeatedly brought into contact with said instruments by flowing turbulently the washing liquid in a washing tank containing said numerous particles of the gradually soluble substance.

3. A method for washing instruments according to claim 2, wherein said washing liquid is turbulently flown by deceleratedly rotating a washing cage inserted with the instruments in said washing liquid in said washing tank either one-directionally or normally or reversely.

4. A method for washing instruments according to claim 2, wherein said gradually soluble substance includes the salts of alkaline peroxides.

5. A method for washing instruments according to claim 2, wherein the particles of said gradually soluble substance are approximately 0.5 to 1 mm in particle size.

6. A device for washing instruments, comprising:
a washing tank (2) having a rotational axis (4) deceleratedly rotated by a motor (3) and passing through a bottom in water-tightness;
a washing cage (5) attached to said rotational axis (4) in said washing tank (2); and
water flow obstructions (6,6') placed in said washing tank (2) in the condition not so as to be brought into contact with said washing cage (5) when said washing cage (5) rotates.

7. A device for washing instruments according to claim 6, wherein said rotational axis (4) is controlled so as to rotate normally or reversely every a predetermined time.

8. A device for washing instruments according to claim 6, wherein said water flow obstructions (6,6') are in a fin form of several pieces extending along the longitudinal direction and formed on the inner wall of said washing tank.

9. A device for washing instruments according to claim 6, wherein said washing cage (5) is divided into a plurality of portions by a plurality of pins or projections (51) standing upright from the bottom portion of said washing cage (5).

10. A device for washing instruments according to claim 6, wherein said washing cage (5) is plain and roughly rectangular.

11. A device for washing instruments according to claim 10, wherein said washing tank (2) is plain and roughly square.

12. A device for washing instruments, comprising:
a washing tank (2) having a rotational axis (4) deceleratedly rotated normally or reversely by a motor (3) and passing through a bottom portion in water-tightness; and
a washing cage (5) attached to said rotational axis (4) in said washing tank (2).

13. A device for washing instruments according to claim 12, wherein said washing cage (5) is divided into a plurality of portions by pins or projections (51) standing upright from the bottom portion of said washing cage (5).

14. A device for washing instruments according to claim 12, wherein said washing cage (5) is plain and roughly rectangular.

15. A device for washing instruments according to claim 14, wherein said washing tank (2) is plain and roughly square.

FIG. I

# FIG. 2

# FIG. 3